Europäisches Patentamt

European Patent Office

Office européen des brevets

(19)

(11) Veröffentlichungsnummer: **0 009 176**
**B1**

(12) **EUROPÄISCHE PATENTSCHRIFT**

(45) Veröffentlichungstag der Patentschrift:
**10.03.82**

(51) Int. Cl.³: **C 04 B 11/14,** C 04 B 13/14

(21) Anmeldenummer: **79103293.1**

(22) Anmeldetag: **05.09.79**

(54) Verfahren zur Herstellung von wässrigen Calciumsulfat-Halbhydrat-Suspensionen und deren Verwendung.

(30) Priorität: **23.09.78 DE 2841488**

(43) Veröffentlichungstag der Anmeldung:
**02.04.80 Patentblatt 80/7**

(45) Bekanntmachung des Hinweises auf die Patenterteilung:
**10.03.82 Patentblatt 82/10**

(84) Benannte Vertragsstaaten:
**BE DE FR GB LU NL**

(56) Entgegenhaltungen:
**DE-A-2 226 943**
**DE-A-2 325 739**
**DE-A-2 341 093**
**DE-A-2 354 647**
**DE-A1-2 557 594**
**DE-A1-2 638 853**
**DE-B1-2 712 190**
**DE-B2-2 542 535**
**EP-A1-0 001 591**

(73) Patentinhaber: **HOECHST Aktiengesellschaft, WERK KNAPSACK, D-5030 Hürth (DE)**

(72) Erfinder: **Dany, Franz-Josef, Dr., Kölner Ring 167, D-5042 Erftstadt (DE)**
Erfinder: **Kalteyer, Gerhard, Laurentiusstrasse 8, D-5042 Erftstadt (DE)**
Erfinder: **Seydel, Joachim, Merricher Strasse 68, D-5040 Brühl (DE)**
Erfinder: **Schrödter, Hermann, Dr., Am Wachberg 54, D-5042 Erftstadt (DE)**

0 009 176

Verfahren zur Herstellung
von wäßrigen Calciumsulfat-Halbhydrat-Suspensionen und deren Verwendung

Die vorliegende Erfindung betrifft ein Verfahren zur Herstellung von gezielt abbindenden wäßrigen Calciumsulfat-Halbhydrat-Suspensionen, wobei man zur Verhinderung des Abbindens mindestens ein Erdalkali- und/oder Alkalihydroxid und/oder Ammoniak und/oder organisches Amin sowie mindestens eine Polycarbonsäure in einer Gesamtmenge von 0,2 bis 2 Gewichts-%, bezogen auf Calciumsulfat-Halbhydrat, zusetzt sowie die Verwendung dieser wäßrigen Calciumsulfat-Halbhydrat-Suspensionen.

Aus der DE-C-704 753 ist es bekannt, das Abbinden von hydraulischen Bindemitteln durch Zusatz von Phosphorsäure zusammen mit Zitronensäure zu verzögern.

Beim Verfahren zur Verzögerung des Abbindens von Gips nach der DE-C-742 023 werden Nitrilotriessigsäure oder analoge wasserlösliche Säuren zugesetzt.

Weiterhin ist bekannt, daß beispielsweise Kaliumhydroxid oder Calciumhydroxid die Abbindezeit von Gips beschleunigend beeinflussen (»Ziegelindustrie«, 19 [1966], Seiten 454 bis 458, insbesondere Tabelle 3).

Nach der DE-B-2 542 535 kann man die Abbindezeit von Anhydrit- und Halbhydratplastern dadurch verzögern, daß man ihnen neben den üblichen Zusätzen an Netz-, Plastifizierungs- und Haftmitteln 0,01 bis 0,5 Gewichts-% D,L-Weinsäure und 1,5 bis 6 Gewichts-% Calciumhydroxid, bezogen auf den Plaster, zufügt. Dadurch werden Verzögerungen im Versteifungsbeginn der wäßrigen Suspension von größenordnungsmäßig 2 Stunden erreicht.

Beim Verfahren zur Steuerung der Abbindezeit von Calciumsulfat-Hemihydrat mit einer vorgewählten Wassermenge nach der DE-A-2 354 647 mischt man einen Teil des Wassers mit einer Calciumverbindung und fügt dem Gemisch unter inniger Durchmischung Schwefelsäure hinzu, welche sich mit der Calciumverbindung teilweise umsetzt. Während der Umsetzung rührt man in die Reaktionsmischung festes Calciumsulfat-Hemihydrat ein. Schließlich wird die Wassermenge in der Endmischung so eingestellt, daß sie gleich der vorgewählten Wassermenge ist. — Aus diesem Dokument ist weiterhin bekannt, daß Schwefelsäure für die Schnellabbindung von Gipsmörteln verantwortlich sein kann.

Nach der DE-A-2 638 853 setzt man Gipsen zur Verzögerung ihrer Abbindezeit 2-Oxapropanpolycarbonsäure oder deren Salze als Abbindeverzögerer zu.

Schließlich ist es aus der DE-A-2 557 594 bekannt, wäßrige Suspensionen von Calciumsulfat-$\alpha$-Halbhydrat mit Zusätzen von Tensiden für selbstnivellierende Estriche zur Bildung von Bodenbelägen mit porenfreier und glatter Oberfläche zu verwenden.

Nachteilig ist bei den bekannten Zusätzen, daß sie den Hydrationsvorgang des Calciumsulfat-Halbhydrates nur wenige Stunden hinauszuzögern gestatten. Daher müssen beispielsweise auf nassem Wege gewonnene Calciumsulfat-$\alpha$-Halbhydrat-Suspensionen nach ihrer Filtration in energetisch aufwendiger Weise unter Erhalt eines Pulvers getrocknet werden, welches am Verbrauchsort dann wieder mit Wasser anzumachen ist.

Es ist daher Aufgabe der vorliegenden Erfindung, ein Verfahren zur Herstellung von wäßrigen Calciumsulfat-Halbhydrat-Suspensionen anzugeben, deren Abbinden durch Zusatz von mindestens einem Erdalkali- und/oder Alkalihydroxid und/oder Ammoniak und/oder organischen Amin sowie von mindestens einer Polycarbonsäure in einer Gesamtmenge von 0,2 bis 2 Gew.-%, bezogen auf Calciumsulfat-Halbhydrat, über Wochen verhindert werden kann, wobei die Verhinderung ihres Abbindens durch einen weiteren Zusatz wieder aufgehoben werden kann. Das wird erfindungsgemäß dadurch erreicht, daß man eine abbindefähige wäßrige Calciumsulfat-Halbhydrat-Suspension einsetzt, welche durch hydrothermale Behandlung von Calciumsulfat-Dihydrat gewonnen wurde, und daß man das Abbinden der Suspension zu einem beliebigen gewünschten Zeitpunkt durch Erniedrigen des pH-Wertes der Suspension auf weniger als 8 durch Zugabe von Mineralsäuren oder deren sauren Salzen auslöst.

Das Verfahren gemäß der Erfindung kann wahlweise auch noch dadurch ausgestaltet sein, daß

a) als saures Salz Kaliumhydrogensulfat dient,
b) 0,2 bis 0,6 Gew.-% Kaliumhydrogensulfat, bezogen auf Calciumsulfat-Halbhydrat, zugegeben werden.

Schließlich können die erfindungsgemäß hergestellten, gezielt abbindenden Calciumsulfat-Halbhydrat-Suspensionen als Baumasse für selbstnivellierende Estriche verwendet werden.

Beim Verfahren gemäß der Erfindung kann als alkalische Komponente auch Zement, insbesondere Portlandzement, offensichtlich wegen seines in bezug auf die Gehalte an $SiO_2$ und $Al_2O_3$ überschüssigen Calciumoxid-Gehaltes, verwendet werden.

Erfindungsgemäß wird die Kombination von alkalischer Komponente und Polycarbonsäure als das Abbinden verhindernder Zusatz Calciumsulfat-$\alpha$-Halbhydrat-Suspensionen zugesetzt, welche durch hydrothermale Behandlung von Calciumsulfat-Dihydrat ohne Durchlaufen einer trockenen Phase hergestellt wurden. Dabei wird das Abbinden durch die genannte Kombination auch dann noch

2

unterbunden, wenn die mit alkalischer Komponente und Polycarbonsäure versetzte Calciumsulfat-Halbhydrat-Suspension mit Hilfe von Filtern oder Zentrifugen zu einer feuchten, rieselfähigen Masse teilentwässert wird. Diese Masse, welche noch etwa 15 bis 20% Restwasser enthält, kann jederzeit wieder mit Wasser unter Erhalt einer Calciumsulfat-Halbhydrat-Suspension mit beliebigem Feststoff-Wasser-Verhältnis angemacht werden.

Nach Zugabe von alkalischer Komponente und Polycarbonsäure liegt der pH-Wert der Calciumsulfat-Halbhydrat-Suspension beim Verfahren gemäß der Erfindung zwischen 8 und 12, vorzugsweise zwischen 9 und 11.

Verwendet man beim erfindungsgemäßen Verfahren zum Erniedrigen des pH-Wertes der Calciumsulfat-Halbhydrat-Suspension Kaliumhydrogensulfat, so weist die resultierende abgebundene Gipsmasse sowohl an ihrer Oberfläche als auch in ihrem Gesamtgefüge hohe Festigkeiten auf. Prüfprismen aus dieser Gipsmasse weisen bei einer Trockendichte von etwa 1,6 g/cm³ Biegezugfestigkeiten von mindestens 5 N/mm² und Druckfestigkeiten von mindestens 23 N/mm² (bestimmt nach DIN 1168, Teil 2, Seite 5, Ausgabe Juli 1975) auf.

Die Wirksamkeit der zeitlichen Verzögerung des Abbindens von wäßrigen Calciumsulfat-Halbhydrat-Suspensionen durch Zusätze läßt sich dadurch ermitteln, daß man die Änderung des Kristallwassergehaltes des in der Suspension enthaltenen Feststoffes über längere Zeiträume verfolgt. Unter Berücksichtigung der theoretischen Kristallwassergehalte für Calciumsulfat-Halbhydrat (6,2 Gew.-%) und für Calciumsulfat-Dihydrat (20,9 Gew.-%) ist der ermittelte Kristallwassergehalt des Feststoffes ein Maß für die vom Halbhydrat zum Dihydrat fortschreitende Hydration des Feststoffes, d. h. ein Maß für den Fortschritt des Abbindevorganges des Halbhydrates.

In der beigefügten Tabelle sind die Kristallwassergehalte des Feststoffes von mit verschiedenen Zusätzen versehenen Calciumsulfat-Halbhydrat-Suspensionen nach 1 Stunde sowie 1, 5, 12 und 42 Tagen angegeben.

Im einzelnen wurde zur Gewinnung der Werte der Tabelle wie folgt verfahren:

Zu etwa 2 l einer Calciumsulfat-Halbhydrat-Suspension mit einer Dichte von 1,7 bis 1,9 g/cm³ wurden die jeweils aufgeführten Substanzen zugesetzt und mit einem mechanischen Rührer innig vermischt. Die Suspension wurde anschließend in einem geschlossenen Gefäß gelagert, wobei in regelmäßigen Abständen die zur Sedimentation neigende Suspension durch Rühren homogenisiert wurde.

An einem aliquoten Teil der Suspension wurde jeweils nach den genannten Zeiten der Kristallwassergehalt des Feststoffes bestimmt. Dazu wurden etwa 50 g der Suspension mit 100 ml Methanol innig verrührt. Die methanolhaltige Suspension wurde über eine Nutsche filtriert und der resultierende Filterkuchen im Trockenschrank bei 45°C getrocknet. Die getrocknete Substanz wurde bei 500°C geglüht. Der Glühverlust entspricht praktisch dem Kristallwassergehalt.

Verwendet man die mit Zusätzen versehenen Calciumsulfat-Halbhydrat-Suspensionen als Ausgangsmaterial für selbstnivellierende Fußbodenestriche, wie sie beispielsweise in der DE-A-2 557 594, der DE-A-2 612 664 oder der DE-A-2 612 689 beschrieben worden sind, so ist einerseits ein niedriger Wasser-Gips-Wert erforderlich (um die nach DIN 4109 geforderten Festigkeitswerte für Gipsestriche zu erreichen) und eine ausreichend niedrige Viskosität notwendig (damit die Selbstnivellierung eintritt). Zur Herabsetzung der Viskosität ist der Zusatz von Verflüssigern wie mit Sulfit oder Sulfonsäure modifizierte Kondensationsprodukte von Melamin mit Formaldehyd, beispielsweise Melment® F 10, oder Tenside, beispielsweise Zeliquid® LP (Hauptbestandteile: Olefinsulfonat und Alkyläthersulfat), erforderlich.

In den folgenden Beispielen sind selbstnivellierende Estrichmassen angegeben, welche aus erfindungsgemäß behandelten Calciumsulfat-Halbhydrat-Suspensionen hergestellt wurden.

Beispiel 1

50 l einer Calciumsulfat-α-Halbhydrat-Suspension wurden mit 183 g Calciumhydroxid und 63 g Zitronensäure intensiv verrührt. Die resultierende Mischung ließ man 24 Stunden sedimentieren. Sodann wurde die überstehende klare flüssige Phase abgehebert und die sedimentierte Phase wieder zu einer homogenen Suspension mit einer Dichte von 1,9 g/cm³ (entsprechend einem Wasser-Gips-Wert von etwa 0,35) aufgerührt. Als Verflüssiger wurden der Suspension beigemischt:

295 g Zeliquid® LP
295 g Tri-n-butylphosphat

Die vergießbare Masse wurde 28 Tage in einem geschlossenen Behältnis stehengelassen, bevor ihr Abbinden nach Homogenisierung mit einem Flügelrührer und durch Zusatz von 295 g Kaliumhydrogensulfat ausgelöst wurde. Nach Vergießen der Masse auf ein etwa 1 m² großes Feld setzte ihr Abbinden nach etwa 2 Stunden ein und war nach etwa 10 Stunden beendet. An aus dieser Masse hergestellten Prüfprismen wurden nach DIN 1168 eine Biegezugfestigkeit von 7,3 N/mm² und eine Druckfestigkeit von 24,5 N/mm² ermittelt.

3

0 009 176

### Beispiel 2

Eine gemäß Beispiel 1 mit Calciumhydroxid und Zitronensäure versetzte Calciumsulfat-$\alpha$-Halbhydrat-Suspension wurde auf einer Filternutsche filtriert. Der Filterkuchen enthielt noch etwa 18 Gew.-% Haftwasser. 37,5 kg dieses Filterkuchens wurden in einem Freifallmischer mit 3 l Wasser und 150 g Melment® F 10 homogen vermischt, in ein verschließbares Behältnis überführt und darin zur Verhinderung von Sedimentation 14 Tage im Kreislauf gepumpt. Zur Auslösung des Abbindens wurden 150 g Kaliumhydrogensulfat zugegeben und zur Durchmischung der Pumpvorgang 30 Minuten fortgesetzt. Die gießfertige Masse wurde in ein ca. 1 m² großes Feld vergossen, wobei ihr Abbinden nach ca. 2 Stunden einsetzte und nach 10 Stunden beendet war. An aus dieser Masse hergestellten Prüfprismen wurden nach DIN 1168 eine Biegezugfestigkeit von 8,4 N/mm² und eine Druckfestigkeit von 27,3 N/mm² ermittelt.

Tabelle

| Nr. | Zusatz | Menge (Gew.-%) | Kristallwassergehalt (Gew.-%) nach | | | | |
|---|---|---|---|---|---|---|---|
| | | | 1 h | 1 d | 5 d | 12 d | 42 d |
| | Einzelsubstanzen (Vergleich) | | | | | | |
| 1 | Calciumhydroxid | 0.54 | 6.6 | 12.2 | 19.9 | — | — |
| 2 | Zement (Portland) | 0.47 | 6.5 | 8.8 | 10.3 | 19.4 | — |
| 3 | Zitronensäure | 0.12 | 19.8 | — | — | — | — |
| 4 | Zitronensäure | 0.60 | 19.2 | — | — | — | — |
| 5 | Polyacrylsäure (35 %ige wäßrige Lösung, K-Wert 15—30) | 0.56 | 8.5 | 17.6 | 20.1 | — | — |
| | Erfindungsgemäße Kombinationen | | | | | | |
| 6 | Calciumhydroxid Zitronensäure | 0.3 0.1 | 6.3 | 6.6 | 7.0 | 7.5 | 7.7 |
| 7 | Calciumhydroxid Zitronensäure | 0.6 0.1 | 6.2 | 6.5 | 6.9 | 6.9 | 7.2 |
| 8 | Calciumhydroxid Zitronensäure | 0.9 0.1 | 6.3 | 6.4 | 6.7 | 6.8 | 7.0 |
| 9 | Calciumhydroxid Zitronensäure | 0.9 0.4 | 6.2 | 6.3 | 6.4 | 6.4 | 6.6 |
| 10 | Natriumhydroxid Zitronensäure | 0.31 0.11 | 6.4 | 6.5 | 7.2 | 7.8 | 8.2 |
| 11 | Kaliumhydroxid Zitronensäure | 0.31 0.11 | 6.4 | 6.6 | 7.5 | 8.0 | 8.9 |
| 12 | Magnesiumhydroxid Zitronensäure | 0.31 0.11 | 6.5 | 6.9 | 7.9 | 8.1 | 8.8 |
| 13 | Ammoniumhydroxid Zitronensäure | 0.31 0.11 | 6.2 | 6.8 | 7.5 | 8.0 | 8.9 |
| 14 | Triäthanolamin Zitronensäure | 0.5 0.12 | 6.0 | 6.3 | 6.8 | 6.8 | 7.0 |

4

Fortsetzung

| Nr. | Zusatz | Menge (Gew.-%) | Kristallwassergehalt (Gew.-%) nach | | | | |
|-----|--------|----------------|------|------|------|------|------|
| | | | 1 h | 1 d | 5 d | 12 d | 42 d |
| 15 | Zement<br>Zitronensäure | 0.31<br>0.11 | 6.3 | 6.6 | 7.3 | 7.4 | 8.0 |
| 16 | Calciumhydroxid<br>Polyacrylsäure | 0.3<br>1.4 | 6.1 | 6.3 | 6.2 | 6.3 | 6.4 |
| 17 | Calciumhydroxid<br>Nitrilotriessigsäure | 0.3<br>0.1 | 6.4 | 7.0 | 7.8 | 8.5 | 9.0 |
| 18 | Calciumhydroxid<br>Nitrilotriessigsäure | 0.6<br>0.2 | 6.2 | 6.4 | 6.8 | 7.2 | 7.5 |
| 19 | Zement<br>L(+)-Ascorbinsäure | 0.31<br>0.11 | 6.3 | 6.8 | 7.4 | 7.6 | 8.5 |
| 20 | Zement<br>DL-Weinsäure | 0.31<br>0.11 | 6.5 | 8.1 | 8.6 | 9.1 | 10.2 |
| 21 | Zement<br>2-Oxa-1,1,3-propan-tricarbonsäure | 0.4<br>0.18 | 6.2 | 6.5 | 6.9 | 7.1 | 7.1 |

**Patentansprüche**

1. Verfahren zur Herstellung von gezielt abbindenden wäßrigen Calciumsulfat-Halbhydrat-Suspensionen, wobei man zur Verhinderung des Abbindens mindestens ein Erdalkali- und/oder Alkalihydroxid und/oder Ammoniak und/oder organisches Amin sowie mindestens eine Polycarbonsäure in einer Gesamtmenge von 0,2 bis 2 Gewichts-%, bezogen auf Calciumsulfat-Halbhydrat, zusetzt, dadurch gekennzeichnet, daß man eine abbindefähige wäßrige Calciumsulfat-Halbhydrat-Suspension einsetzt, welche durch hydrothermale Behandlung von Calciumsulfat-Dihydrat gewonnen wurde; und daß man das Abbinden der Suspension zu einem beliebigen, gewünschten Zeitpunkt durch Erniedrigen des pH-Wertes der Suspension auf weniger als 8 durch Zugabe von Mineralsäuren oder deren sauren Salzen auslöst.

2. Verfahren nach Anspruch 1, dadurch gekennzeichnet, daß als saures Salz Kaliumhydrogensulfat dient.

3. Verfahren nach Anspruch 2, dadurch gekennzeichnet, daß 0,2 bis 0,6 Gew.-% Kaliumhydrogensulfat, bezogen auf Calciumsulfat-Halbhydrat, zugegeben werden.

4. Verwendung von gezielt abbindenden wäßrigen Calciumsulfat-Halbhydrat-Suspensionen, hergestellt nach dem Verfahren gemäß den Patentansprüchen 1 bis 3, als Baumasse für selbstnivellierende Estriche.

**Claims**

1. Process for making aqueous calcium sulfate semihydrate suspensions setting under control, the setting being inhibited by the addition of at least one alkaline earth metal and/or alkali metal hydroxide and/or ammonia and/or an organic amine and at least one polycarboxylic acid in a total proportion of 0.2 to 2 weight %, based on calcium sulfate semihydrate, characterized in that an aqueous calcium sulfate semihydrate suspension capable of setting and having been obtained by subjecting calcium sulfate dihydrate to hydrothermal treatment is used, and in that the setting of the suspension is initiated at any moment deemed desirable by reducing the pH-value of the suspension to less than 8 by the addition of mineral acids or their acid salts.

2. Process as claimed in claim 1, wherein potassium hydrogen sulfate is used as the acid salt.

3. Process as claimed in claim 2, wherein the potassium hydrogen sulfate is added at a rate of 0.2 to 0.6 weight %, based on calcium sulfate semihydrate.

4. Use of aqueous calcium sulfate semihydrate suspensions setting under control prepared by a process as claimed in claims 1 to 3 as a construction mass for making self-levelling floor surfacings.

**Revendications**

1. Procédé de préparation de suspensions aqueuses de sulfate de calcium hémihydraté à prise contrôlée, la prise étant empêchée par addition d'au moins un hydroxyde alcalin et/ou alcalino-terreux et/ou d'ammoniac et/ou d'une amine organique ainsi que d'au moins un acide polycarboxylique en quantité totale comprise entre 0,2 et 2% en poids, par rapport au sulfate de calcium hémihydraté, caractérisé en ce que l'on utilise une suspension aqueuse de sulfate de calcium hémihydraté capable de prendre et obtenue en soumettant du sulfate de calcium dihydraté à un traitement hydrothermique et en ce que l'on déclenche la prise de la suspension à un moment voulu par abaissement du pH de la suspension à une valeur inférieure à 8 par addition d'acides minéraux ou de leurs sels acides.

2. Procédé selon la revendication 1, caractérisé en ce que l'on utilise comme sel acide le bisulfate de potassium.

3. Procédé selon la revendication 2, caractérisé en ce que l'on ajoute le bisulfate de potassium à raison de 0,2 à 0,6% en poids, par rapport au sulfate de calcium hémihydraté.

4. Utilisation de suspensions aqueuses de sulfate de calcium hémihydraté à prise contrôlée, préparées par le procédé selon les revendications 1 à 3, comme masses de construction pour la réalisation d'aires auto-nivelantes.